# EUROPEAN PATENT APPLICATION

(11) **EP 4 807 035 A1**
(43) Date of publication of application: **16.09.2026**
(21) Application number: 25751996.7
(22) Date of filing: 23.01.2025
(51) Int. Cl.: C22C 38/00, C21D 8/12, C22C 38/06, C22C 38/60

(54) **HOT-ROLLED ANNEALED SHEET FOR ELECTRICAL STEEL SHEET, METHOD FOR PRODUCING SAME, AND METHOD FOR PRODUCING NON-ORIENTED ELECTRICAL STEEL SHEET**

(30) Priority: 05.02.2024 JP 2024015848
(71) Applicant: JFE Steel Corporation, Tokyo 100-0011 (JP)
(72) Inventor: TANAKA, Takaaki, Tokyo 100-0011 (JP); OKUBO, Tomoyuki, Tokyo 100-0011 (JP); SAITO, Hayato, Tokyo 100-0011 (JP); MARUYAMA, Shigehiro, Tokyo 100-0011 (JP)
(74) Representative: Scott, Stephen John
(86) International application number: PCT/JP2025/002107
(87) International publication number: WO 2025/169742

(57) **Abstract**

Provided is a hot-rolled and annealed sheet for an electrical steel sheet having excellent cold rolling manufacturability (fracture resistance and edge crack resistance) in subsequent processes. The hot-rolled and annealed sheet for an electrical steel sheet has a chemical composition containing, in mass%, C: 0.010 % or less, Si: 1.0 % or more and 5.0 % or less, Mn: 0.05 % or more and 5.0 % or less, P: 0.1 % or less, S: 0.01 % or less, Al: 3.0 % or less, and N: 0.0080 % or less, with the balance being Fe and inevitable impurities, and at least at one sheet width edge, a ratio d_{C}/d_{E} of an average grain size d_{C} at a sheet width central portion to an average grain size d_{E} at a position 10 mm from a sheet width edge is 1.2 or more.

## Description

### TECHNICAL FIELD

The present disclosure relates to a hot-rolled and annealed sheet for an electrical steel sheet and a method of producing the same, and a method of producing a non-oriented electrical steel sheet.

### BACKGROUND

In recent years, due to concerns about the environment, such as global warming, demand has increased for reducing CO₂ emissions and saving energy. In the automotive field, hybrid electric vehicles (HEVs) that use both engines and motors, electric vehicles (EVs) that are driven solely by electric motors, fuel cell vehicles (FCEVs), and the like are being developed. The motors used in the aforementioned HEVs, EVs, FCEVs, and the like are generally driven in a high frequency range that is advantageous for high speed rotation, in order to improve motor efficiency. Non-oriented electrical steel sheets are often used as the iron core material for the motors, and in order to achieve high efficiency in the motors, strong demand exists for the steel sheets to have low iron loss in the high frequency range.

Conventionally, efforts to reduce iron loss in non-oriented electrical steel sheets have been made by adding alloying elements such as Si and Al to increase resistivity, or by reducing eddy current loss through a reduction in the sheet thickness. However, the addition of large amounts of alloying elements reduces the ductility and toughness of the steel sheet, resulting in frequent fractures during the cold rolling process. As a technique for suppressing fracture of high alloy steel, for example, Patent Literature (PTL) 1 and 2 disclose a method of producing a non-oriented electrical steel sheet with high magnetic flux density, in which cracking during cold rolling is controlled by cold rolling, at 180 °C to 350 °C, cast steel subjected to quenching solidification.

### CITATION LIST

### Patent Literature

PTL 1: JP 2004-323972 A
PTL 2: JP 2005-298876 A

### SUMMARY

### (Technical Problem)

However, although cracking can be controlled in the techniques described in PTL 1 and 2 by performing cold rolling in a temperature range of 180 °C to 350 °C, problems remain in that it is difficult to maintain the steel sheet at a high temperature during rolling, and in that there is a high probability of causing equipment wear, such as sticking of lubricating oil on the rollers.

The present disclosure has been made in consideration of the aforementioned problems with conventional techniques, and an object thereof is to provide a hot-rolled and annealed sheet for an electrical steel sheet that has excellent cold rolling manufacturability (fracture resistance and edge crack resistance) in subsequent processes, together with an advantageous method of producing the same.

### (Solution to Problem)

We have conducted extensive research into solving the aforementioned problems and have discovered that in most cases, the initiation point of fracture due to cold rolling is located in a region near the edge of the hot-rolled and annealed sheet (steel strip), and that by increasing the fracture resistance of this region, fractures and cracks can be significantly suppressed, without the need to increase the fracture resistance of the entire hot-rolled and annealed sheet. Furthermore, we discovered that by refining the crystal grains in this region to yield a difference in crystal grain size from the central portion as a method for increasing the fracture resistance of this region, fracture resistance can be improved more than when refining the crystal grains in the entire hot-rolled and annealed sheet, and a deterioration in magnetic properties can be prevented.

The present disclosure has been made based on these findings and has the following configuration.
[1] A hot-rolled and annealed sheet for an electrical steel sheet, comprising a chemical composition containing (consisting of), in mass%,
   C: 0.010 % or less,
   Si: 1.0 % or more and 5.0 % or less,
   Mn: 0.05 % or more and 5.0 % or less,
   P: 0.1 % or less,
   S: 0.01 % or less,
   Al: 3.0 % or less, and
   N: 0.0080 % or less,
   with the balance being Fe and inevitable impurities, wherein
   at least at one sheet width edge,
   a ratio d_{C}/d_{E} of an average grain size d_{C} at a sheet width central portion to an average grain size d_{E} at a position 10 mm from a sheet width edge is 1.2 or more.
[2] The hot-rolled and annealed sheet for an electrical steel sheet according to [1], wherein the chemical composition further contains, in mass%, one or more selected from the group consisting of
   Zn: 0.0005 % or more and 0.020 % or less,
   Mo: 0.002 % or more and 0.20 % or less,
   Ni: 0.01 % or more and 1.0 % or less,
   Cr: 0.01 % or more and 5.0 % or less,
   Cu: 0.005 % or more and 1.0 % or less,
   Ca: 0.0001 % or more and 0.10 % or less,
   Mg: 0.0001 % or more and 0.10 % or less,
   REM: 0.0001 % or more and 0.10 % or less,
   Sn: 0.001 % or more and 0.20 % or less,
   Sb: 0.001 % or more and 0.20 % or less,
   B: 0.0020 % or less,
   Ti: 0.010 % or less,
   Nb: 0.0050 % or less,
   V: 0.0050 % or less,
   Pb: 0.0050 % or less,
   Zr: 0.0050 % or less,
   Ta: 0.0020 % or less,
   W: 0.0050 % or less,
   Se: 0.0050 % or less,
   Bi: 0.0050 % or less,
   As: 0.020 % or less,
   Co: 0.10 % or less,
   Ge: 0.030 %, and
   Ga: 0.030 % or less.
[3] The hot-rolled and annealed sheet for an electrical steel sheet according to [1] or [2], wherein the average grain size d_{C} at the sheet width central portion is 70 µm or more and 300 µm or less, and the average grain size d_{E} at a position 10 mm from the sheet width edge is 10 µm or more and 200 µm or less.
[4] The hot-rolled and annealed sheet for an electrical steel sheet according to any one of [1] to [3], wherein a maximum value of an average grain size gradient in a sheet transverse direction is 0.2 µm/mm or more and 1.5 µm/mm or less.
[5] The hot-rolled and annealed sheet for an electrical steel sheet according to any one of [1] to [4], wherein a position at which an average grain size gradient in a sheet transverse direction reaches a maximum is within 200 mm from the sheet width edge.
[6] The hot-rolled and annealed sheet for an electrical steel sheet according to any one of [1] to [5], wherein at both sheet width edges, the ratio d_{C}/d_{E} of the average grain size dc at the sheet width central portion to the average grain size d_{E} at a position 10 mm from the sheet width edge is 1.2 or more.
[7] A method of producing the hot-rolled and annealed sheet for an electrical steel sheet according to any one of [1] to [6], the method comprising a hot rolling process of hot-rolling a steel material having the chemical composition according to [1] or [2] to obtain a hot-rolled sheet, and a hot-rolled sheet annealing process of subjecting the hot-rolled sheet to hot-rolled sheet annealing, wherein in the hot-rolled sheet annealing process, when a sheet width central portion of the hot-rolled sheet is held at a holding temperature T₁, a maximum arrival temperature T₂ at a position 10 mm from a sheet width edge satisfies T₁ - T₂ ≥ 20 °C at least at one sheet width edge of the hot-rolled sheet.
[8] The method of producing the hot-rolled and annealed sheet for an electrical steel sheet according to [7], wherein in the hot-rolled sheet annealing process, the holding temperature T₁ at the sheet width central portion of the hot-rolled sheet is 900 °C or higher and 1150 °C or lower, and a holding time t₁ at T₁ is 1 s or longer and 120 s or shorter.
[9] The method of producing a hot-rolled and annealed sheet for an electrical steel sheet according to [7] or [8], wherein in the hot-rolled sheet annealing process, the maximum arrival temperature T₂ is 750 °C or higher and 1000 °C or lower.
[10] The method of producing a hot-rolled and annealed sheet for an electrical steel sheet according to any one of [7] to [9], wherein in the hot-rolled sheet annealing process, a time t₂ during which a temperature at a position 10 mm from the sheet width edge of the hot-rolled sheet is equal to or higher than the maximum arrival temperature T₂ - 50 °C is 5 s or longer and 50 s or shorter.
[11] The method of producing a hot-rolled and annealed sheet for an electrical steel sheet according to any one of [7] to [10], wherein in the hot-rolled sheet annealing process, a heating suppression region is between the sheet width edge and a position X₁ mm from the sheet width edge, and X₁ is 20 mm or more and 250 mm or less.
[12] The method of producing a hot-rolled and annealed sheet for an electrical steel sheet according to any one of [7] to [11], wherein the maximum arrival temperature T₂ at a position 10 mm from the sheet width edge satisfies T₁ - T₂ ≥ 20 °C at both sheet width edges of the hot-rolled sheet.
[13] A method of producing a non-oriented electrical steel sheet, the method comprising a cold rolling process of cold rolling the hot-rolled and annealed sheet for an electrical steel sheet according to any one of [1] to [6] to obtain a cold-rolled sheet, and an annealing process of annealing the cold-rolled sheet.

In the present disclosure, the sheet width edge refers to an edge in the sheet transverse direction and may be either the left or right edge.

### (Advantageous Effect)

According to the present disclosure, a hot-rolled and annealed sheet for an electrical steel sheet, which has excellent cold rolling manufacturability (fracture resistance and edge crack resistance) in subsequent processes, is provided together with an advantageous method of producing the same. In the electrical steel sheet produced using the hot-rolled and annealed sheet of the present disclosure, deterioration in magnetic properties is sufficiently avoided. In particular, by using the hot-rolled and annealed sheet of the present disclosure in the production of a non-oriented electrical steel sheet, a non-oriented electrical steel sheet with high magnetic flux density and low iron loss at high frequencies can be provided, and by using this non-oriented electrical steel sheet, high efficiency in motors can be achieved. Even if the non-oriented electrical steel sheet is subjected to stress relief annealing in order to reduce the increase in iron loss due to strain during blanking, the above effects are not affected in any way.

### DETAILED DESCRIPTION

The reasons for the limitations of the present disclosure will be described below.

### [Hot-rolled and annealed sheet]

### <Chemical composition>

The chemical composition of the hot-rolled and annealed sheet of the present disclosure will be described. Hereinafter, the unit "%" relating to the content of elements in the chemical composition refers to "mass%" unless specified otherwise.

### C: 0.010 % or less

C is an element that forms carbides and adversely affects the iron loss characteristics. In particular, if the C content exceeds 0.010 %, the adverse effects become significant. Hence, the C content is set to 0.010 % or less. The C content is preferably 0.004 % or less. Although the lower limit of C is not particularly specified, an excessive reduction in C leads to an increase in costs. The lower limit of the C content is therefore preferably set to about 0.0001 %.

### Si: 1.0 % or more and 5.0 % or less

Si has the effect of increasing the resistivity of steel and reducing iron loss and also has the effect of increasing the strength of steel through solid solution strengthening. To obtain such effects, the Si content should be set to 1.0 % or more. On the other hand, if the Si content exceeds 5.0 %, the magnetic flux density drops significantly. Hence, the upper limit is set to 5.0 %. The Si content is therefore 1.0 % or more and 5.0 % or less. The Si content is preferably 1.5 % or more. The Si content is preferably less than to 4.5 %. The Si content is more preferably 2.0 % or more. The Si content is more preferably less than 4.0 %.

### Mn: 0.05 % or more and 5.0 % or less

Mn, like Si, is a useful element for increasing the resistivity and strength of steel. To obtain such effects, the Mn content should be set to 0.05 % or more. On the other hand, if the Mn content exceeds 5.0 %, the precipitation of MnC may be promoted, which may degrade the magnetic properties. Hence, the upper limit is set to 5.0 %. The Mn content is therefore set to 0.05 % or more and 5.0 % or less. The Mn content is preferably 0.1 % or more. The Mn content is preferably 3.0 % or less.

### P: 0.1 % or less

P is a useful element used to adjust the strength (hardness) of steel. However, if the P content exceeds 0.1 %, the toughness decreases and cracks tend to occur during processing. Hence, the upper limit is set to 0.1 %. Although the lower limit is not particularly specified, an excessive reduction in P leads to an increase in costs. The lower limit of the P content is therefore preferably set to 0.001 %. The P content is preferably 0.003 % or more. The P content is preferably 0.08 % or less.

### S: 0.01 % or less

S is an element that forms fine precipitates and adversely affects the iron loss characteristics. In particular, if the S content exceeds 0.01 %, the adverse effects become significant. Hence, the S content is set to 0.01 % or less. The S content is more preferably 0.005 % or less. Although the lower limit is not particularly specified, an excessive reduction in S leads to an increase in costs. The lower limit of the S content is therefore preferably set to 0.0001 %. The S content is preferably 0.0003 % or more. The S content is preferably 0.0080 % or less.

### Al: 3.0 % or less

Like Si, Al is a useful element that has the effect of increasing the resistivity of steel and reducing iron loss. To obtain such effects, the Al content is preferably 0.005 % or more. The Al content is more preferably 0.010 % or more. The Al content is even more preferably 0.015 % or more. On the other hand, if the Al content exceeds 3.0 %, nitriding of the steel sheet surface is promoted, which may degrade the magnetic properties. Hence, the upper limit is set to 3.0 %. The upper limit is more preferably 2.0 % or less.

### N: 0.0080 % or less

N is an element that forms fine precipitates and adversely affects the iron loss characteristics. In particular, if the N content exceeds 0.0080 %, the adverse effects become significant. Hence, the N content is set to 0.0080 % or less. The N content is preferably 0.003 % or less. Although the lower limit is not particularly specified, an excessive reduction in N leads to an increase in costs. The lower limit of the N content is therefore preferably set to 0.0005 %. The N content is preferably 0.0008 % or more. The N content is preferably 0.0030 % or less.

The chemical composition of the present disclosure may further contain one or more elements selected from the group consisting of Zn, Mo, Ni, Cr, Cu, Ca, Mg, REM, Sn, and Sb within the following ranges, according to the required properties.

### Zn: 0.0005 % or more and 0.020 % or less

Zn is an element that is effective in improving the magnetic flux density and reducing iron loss by improving the texture. To obtain such effects, the Zn content should be set to 0.0005 % or more. On the other hand, if the Zn content exceeds 0.020 %, the effect becomes saturated and merely results in an increase in costs. Hence, the upper limit is set to 0.020 %. Therefore, when Zn is included, the Zn content is preferably 0.0005 % or more. The Zn content is preferably 0.020 % or less. The Zn content is more preferably 0.0050 % or less.

### Mo: 0.002 % or more and 0.20 % or less

Mo has the effect of forming fine carbides in steel and increasing the strength of the steel sheet. To obtain such effects, the Mo content should be set to 0.01 % or more. On the other hand, if the Mo content exceeds 0.20 %, excessive carbides are formed, degrading the iron loss. Hence, the upper limit is set to 0.20 %. Therefore, when Mn is included, the Mo content is preferably 0.01 % or more. The Mo content is preferably 0.20 % or less.

### Ni: 0.01 % or more and 1.0 % or less

Ni is an element that improves the toughness of steel and can be included as appropriate. To obtain such an effect, the Ni content should be set to 0.01 % or more. However, if the Ni content exceeds 1.0 %, the effect becomes saturated. Hence, the upper limit is set to 1.0 %. Therefore, when Ni is included, the Ni content is preferably 0.01 % or more. The Ni content is preferably 0.01 % or less.

### Cr: 0.01 % or more and 5.0 % or less

Cr has the effect of increasing the resistivity of steel and reducing iron loss. To obtain such an effect, the Cr content should be set to 0.05 % or more. On the other hand, if the Cr content exceeds 5.0 %, the magnetic flux density drops significantly as the saturation magnetic flux density drops. Hence, the upper limit is set to 5.0 %. Therefore, when Cr is included, the Cr content is preferably 0.01 % or more. The Cr content is preferably 5.0 % or less. The Cr content is more preferably 0.05 % or more.

### Cu: 0.01 % or more and 1.0 % or less

Cu is an element that improves the toughness of steel and can be included as appropriate. To obtain such an effect, the Cu content should be set to 0.01 % or more. However, if the Cu content exceeds 1.0 %, the effect becomes saturated. Hence, the upper limit is set to 1.0 %. Therefore, when Cu is included, the Cu content is preferably 0.01 % or more. The Cu content is preferably 1.0 % or less.

### Ca: 0.0001 % or more and 0.10 % or less

Ca is an element that fixes S as sulfides and contributes to reducing iron loss. To obtain such effects, the Ca content should be set to 0.0001 % or more. On the other hand, if the Ca content exceeds 0.10 %, the effect becomes saturated and merely results in an increase in costs. Hence, the upper limit is set to 0.10 %. Therefore, when Ca is included, the Ca content is preferably 0.0001 % or more. The Ca content is preferably 0.10 % or less.

### Mg: 0.0001 % or more and 0.10 % or less

Mg is an element that fixes S as sulfides and contributes to reducing iron loss. To obtain such effects, the Mg content should be set to 0.0001 % or more. On the other hand, if the Mg content exceeds 0.10 %, the effect becomes saturated and merely results in an increase in costs. Hence, the upper limit is set to 0.10 %. Therefore, when Mg is included, the Mg content is preferably 0.0001 % or more. The Mg content is preferably 0.10 % or less.

### REM: 0.0001 % or more and 0.10 % or less

REM is a group of elements that fix S as sulfides and contribute to reducing iron loss. To obtain such effects, the REM content should be set to 0.0001 % or more. On the other hand, if the REM content exceeds 0.10 %, the effect becomes saturated and merely results in an increase in costs. Hence, the upper limit is set to 0.10 %. Therefore, when REM is included, the REM content is preferably 0.0001 % or more. The REM content is preferably 0.10 % or less.

### Sn: 0.001 % or more and 0.20 % or less

Sn is an element that is effective in improving the magnetic flux density and reducing iron loss by improving the texture. To obtain such effects, the Sn content should be set to 0.001 % or more. On the other hand, if the Sn content exceeds 0.20 %, the effect becomes saturated and merely results in an increase in costs. Hence, the upper limit is set to 0.20 %. Therefore, when Sn is included, the Sn content is preferably 0.001 % or more. The Sn content is preferably 0.20 % or less.

### Sb: 0.001 % or more and 0.20 % or less

Sb is an element that is effective in improving the magnetic flux density and reducing iron loss by improving the texture. To obtain such effects, the Sb content should be set to 0.001 % or more. On the other hand, if the Sb content exceeds 0.20 %, the effect becomes saturated and merely results in an increase in costs. Hence, the upper limit is set to 0.20 %. Therefore, when Sb is included, the Sb content is preferably 0.001 % or more. The Sb content is preferably 0.20 % or less.

The chemical composition of the present disclosure may further contain one or more elements selected from the group consisting of B, Ti, Nb, V, Pb, Zr, Ta, W, Se, Bi, As, Co, Ge, and Ga.

### B: 0.0020 % or less

B is an element that contributes to improving the strength of a steel sheet by refining the microstructure of the steel sheet. However, if B is added in an amount exceeding 0.0020 %, nitrides precipitate in the steel during operation, increasing iron loss. Therefore, when B is included, the upper limit of the B content is set to 0.0020 %. The B content may be 0 %.

### Ti: 0.010 % or less

Ti is an element that contributes to improving the strength of a steel sheet by refining the microstructure of the steel sheet. However, if Ti is added in an amount exceeding 0.010 %, excessive carbides will precipitate in the steel, increasing iron loss. Therefore, when Ti is included, the upper limit of the Ti content is set to 0.010 %. The Ti content may be 0 %.

### Nb: 0.0050 % or less

Nb is an element that contributes to improving the strength of a steel sheet by refining the microstructure of the steel sheet. However, if Nb is added in an amount exceeding 0.0050 %, excessive carbides will precipitate in the steel, increasing iron loss. Therefore, when Nb is included, the upper limit of the Nb content is set to 0.0050 %. The Nb content may be 0 %.

### V: 0.0050 % or less

V is an element that contributes to improving the strength of a steel sheet by refining the microstructure of the steel sheet. However, if V is added in an amount exceeding 0.0050 %, excessive carbides will precipitate in the steel, increasing iron loss. Therefore, when V is included, the upper limit of the V content is set to 0.0050 %. The V content may be 0 %.

### Pb: 0.0050 % or less

Pb is an element that contributes to improving the strength of a steel sheet by refining the microstructure of the steel sheet. However, if Pb is added in an amount exceeding 0.0050 %, Pb precipitates excessively in the steel, increasing iron loss. Therefore, when Pb is included, the upper limit of the Pb content is set to 0.0050 %. The Pb content may be 0 %.

### Zr: 0.0050 % or less

Zr is an element that contributes to improving the strength of a steel sheet by refining the microstructure of the steel sheet. However, if Zr is added in an amount exceeding 0.0050 %, excessive carbides will precipitate in the steel, increasing iron loss. Therefore, when Zr is included, the upper limit of the Zr content is set to 0.0050 %. The Zr content may be 0 %.

### Ta: 0.0020 % or less

Ta is an element that contributes to improving the strength of a steel sheet by refining the microstructure of the steel sheet. However, if Ta is added in an amount exceeding 0.0020 %, excessive carbides will precipitate in the steel, increasing iron loss. Therefore, when Ta is included, the upper limit of the Ta content is set to 0.0020 %. The Ta content may be 0 %.

### W: 0.0050 % or less

W is an element that contributes to improving the strength of a steel sheet by refining the microstructure of the steel sheet. However, if W is added in an amount exceeding 0.0050 %, excessive carbides will precipitate in the steel, increasing iron loss. Therefore, when W is included, the upper limit of the W content is set to 0.0050 %. The W content may be 0 %.

### Se: 0.0050 % or less

Se is an element that contributes to improving the strength of a steel sheet by refining the microstructure of the steel sheet. However, if Se is added in an amount exceeding 0.0050 %, excessive MnSe will precipitate in the steel, increasing iron loss. Therefore, when Se is included, the upper limit of the Se content is set to 0.0050 %. The Se content may be 0 %.

### Bi: 0.0050 % or less

Bi is an element that contributes to improving the strength of a steel sheet by refining the microstructure of the steel sheet. However, if Bi is added in an amount exceeding 0.0050 %, Bi precipitates excessively in the steel, increasing iron loss. Therefore, when Bi is included, the upper limit of the Bi content is set to 0.0050 %. The Bi content may be 0 %.

### As: 0.020 % or less

As contributes to improving the magnetic flux density of a steel sheet by improving the texture. On the other hand, the effect becomes saturated at a concentration of 0.030 % or more. Therefore, when As is included, the upper limit of the As content is set to 0.10 %. The As content may be 0 %.

### Co: 0.10 % or less

Co contributes to improving the magnetic flux density of the steel sheet by increasing the saturation magnetic flux density. On the other hand, if the Co content exceeds 0.10 %, costs become excessively high. Therefore, when Co is included, the upper limit of the Co content is set to 0.10 %. The Co content may be 0 %.

### Ge: 0.030 % or less

Ge contributes to improving the magnetic flux density of a steel sheet by improving the texture. On the other hand, the effect becomes saturated at a concentration of 0.030 % or more. Therefore, when Ge is included, the upper limit of the Ge content is set to 0.10 %. The Ge content may be 0 %.

### Ga: 0.030 % or less

Ga contributes to improving the magnetic flux density of a steel sheet by improving the texture. On the other hand, the effect becomes saturated at a concentration of 0.030 % or more. Therefore, when Ga is included, the upper limit of the Ga content is set to 0.10 %. The Ga content may be 0 %.

In the above chemical composition, the balance other than the above components is Fe and inevitable impurities.

### <Microstructure>

Next, the microstructure of the hot-rolled and annealed sheet of the present disclosure will be described.

### (Ratio d_{C}/d_{E} of average grain size dc at sheet width central portion to grain size d_{E} at a position 10 mm from sheet width edge: 1.2 or more)

Through investigation, we discovered that by providing a difference in the crystal grain size between the sheet width central portion and the region near the sheet width edge, fracture and edge cracks during the cold rolling process are suppressed significantly more than when the grain size of the entire hot-rolled and annealed sheet is simply refined. The reasons for this are presumed to be as follows.

In general, the work hardening rate with respect to plastic deformation decreases as the crystal grain size decreases. When the crystal grain size in the region near the sheet width edge is smaller than in the sheet width central portion, the work hardening rate in the region near the sheet width edge is also smaller than in the sheet width central portion, and stress acts during rolling to reduce the tension in the region near the sheet width edge. This is thought to achieve significant control of the occurrence of crack initiation points in the region near the sheet width edge and to reduce fractures and edge cracks.

Furthermore, we discovered through investigation that taking the ratio d_{C}/d_{E} of the average grain size dc in the sheet width central portion of the hot-rolled and annealed sheet to the average grain size d_{E} at a position 10 mm from the sheet width edge as the difference in crystal grain size between the sheet width central portion and the region near the sheet width edge, and setting this ratio d_{C}/d_{E} to 1.2 or more, a hot-rolled and annealed sheet in which fracture and edge cracks during cold rolling are sufficiently suppressed can be obtained. The ratio d_{C}/d_{E} is preferably 1.4 or more. The ratio d_{C}/d_{E} is more preferably 1.6 or more. There is no particular upper limit on the ratio d_{C}/d_{E}, but the upper limit can be set to 10 or less, for example. In a hot-rolled and annealed sheet produced by the below-described method of producing a hot-rolled and annealed sheet of the present disclosure, for example, the ratio d_{C}/d_{E} is usually 10 or less.

The average grain size dc at the sheet width central portion of the hot-rolled and annealed sheet and the average grain size d_{E} at a position 10 mm from the sheet width edge can be measured by the respective methods described in the Examples.

The hot-rolled and annealed sheet of the present disclosure only needs to have the ratio d_{C}/d_{E} satisfy 1.2 or more at least at one sheet width edge, but having the ratio d_{C}/d_{E} satisfy 1.2 or more at both width edge portions is effective in reducing fracture in subsequent processes. However, in cases where edge cracks or fracture occur unevenly on one edge due to the characteristics of the rolling mill, for example, a sufficient effect of reducing fracture may be obtained by ensuring that only one edge has a d_{C}/d_{E} ratio of 1.2 or more.

Preferred embodiments of the hot-rolled and annealed sheet of the present disclosure are described in greater detail below. Unless otherwise specified, the term "sheet width edge" refers to a sheet width edge for which the ratio d_{C}/d_{E} is 1.2 or more.

### (Average grain size d_{C} at the sheet width central portion: 70 µm or more and 300 µm or less; average grain size d_{E} at a position 10 mm from the sheet width edge: 10 µm or more and 200 µm or less)

In the hot-rolled and annealed sheet of the present disclosure, the ratio d_{C}/d_{E} of the average grain size d_{C} at the sheet width central portion to the average grain size d_{E} at a position 10 mm from the sheet width edge is controlled to be 1.2 or more, and the effects of the present disclosure are not limited by the values themselves of the average grain size at each position. However, to make the effects of the present disclosure more pronounced, d_{C} and d_{E} are preferably in the following ranges, respectively.

The average grain size dc at the sheet width central portion is preferably 70 µm or more. The average grain size dc at the sheet width central portion is preferably 300 µm or less. If dc is 70 µm or more, the effect of suppressing deterioration of the magnetic properties of the electrical steel sheet produced using the hot-rolled and annealed sheet of the present disclosure is greater, and if dc is 300 µm or less, the effect of suppressing fracture by controlling the ratio d_{C}/d_{E} can be more effectively achieved.

The average grain size d_{E} at a position 10 mm from the sheet width edge is preferably 10 µm or more. The average grain size d_{E} at a position 10 mm from the sheet width edge is preferably 200 µm or less. If d_{E} is 10 µm or more, it is easy to avoid situations in which the sheet width edge becomes excessively hard due to strengthening of the crystal grain refinement, which would end up promoting the creation of fracture initiation points, whereas if d_{E} is 200 µm or less, the fracture suppression effect of controlling the ratio d_{C}/d_{E} can be more effectively exerted.

### (Maximum value Δdₘₐₓ of average grain size gradient in sheet transverse direction: 0.2 µm/mm or more and 5.0 µm/mm or less)

Through investigation, we discovered that to prevent fracture, it is effective to avoid excessively large microstructural changes in the sheet transverse direction. To avoid the occurrence of stress concentration sites during rolling and the promotion of fracture with an initiation point inside the steel sheet, the maximum value of the average grain size gradient in the sheet transverse direction is preferably 5.0 µm/mm or less. This maximum value is more preferably 4.0 µm/mm or less. This maximum value is even more preferably 3.0 µm/mm or less. On the other hand, to fully obtain the fracture suppression effect achieved by controlling the ratio d_{C}/d_{E}, the maximum value of the average grain size gradient in the sheet transverse direction is 0.2 µm/mm or more.

The maximum value of the average grain size gradient in the sheet transverse direction can be determined by the method described in the Examples.

### (Position X₂ at which the average grain size gradient in the sheet transverse direction reaches its maximum: within 200 mm from the sheet width edge)

Through investigation, we discovered that by controlling the distance between the position at which the average grain size gradient reaches its maximum and the sheet width edge, the effect of reducing the tension at the sheet width edge can be achieved, thereby sufficiently suppressing fracture. For this reason, the position at which the average grain size gradient in the sheet transverse direction reaches its maximum is preferably within 200 mm from the sheet width edge. This position is more preferably within 100 mm. This position is even more preferably within 50 mm.

The position at which the average grain size gradient in the sheet transverse direction reaches its maximum can be determined by the method described in the Examples.

The hot-rolled and annealed sheet of the present disclosure is used for producing an electrical steel sheet. The electrical steel sheet encompasses a non-oriented electrical steel sheet and a grain-oriented electrical steel sheet.

### [Method of producing a hot-rolled and annealed sheet]

Next, a method of producing a hot-rolled and annealed sheet of the present disclosure will be described.

The method of producing a hot-rolled and annealed sheet of the present disclosure is, in outline, a method of obtaining the above-described hot-rolled and annealed sheet of the present disclosure by sequentially subjecting a steel material having the aforementioned chemical composition to hot rolling and hot-rolled sheet annealing. In the method of producing a hot-rolled and annealed sheet of the present disclosure, as long as the steel material satisfies the chemical composition specified in the present disclosure and the hot-rolled sheet annealing conditions are within the range of the present disclosure, there are no other particular limitations, and known techniques can be applied.

### <Steel material>

The steel material is not particularly limited as long as it has the chemical composition described for the hot-rolled and annealed sheet.

The method of melting the steel material is not particularly limited, and any known method of melting using a converter, an electric furnace, or the like can be used. From the viewpoint of productivity and the like, it is preferable to form a slab (steel material) by continuous casting after melting, but a slab may also be formed by a known casting method such as ingot-making/blooming or thin slab continuous casting.

### <Hot rolling process>

The hot rolling process is a process of obtaining a hot-rolled sheet by hot rolling a steel material having the aforementioned chemical composition. The hot rolling process is not particularly limited as long as it is a process in which a steel material having the aforementioned chemical composition is heated and hot rolled to obtain a hot-rolled sheet of a predetermined size, and any known hot rolling process can be applied.

An example of the hot rolling process is a hot rolling process in which a steel material is heated to a temperature of 1000 °C or higher and 1200 °C or lower, the heated steel material is hot rolled at a finisher delivery temperature of 800 °C or higher and 950 °C or lower, and after the hot rolling is completed, the steel material is subjected to appropriate post-rolling cooling (for example, cooling in a temperature range of 450 °C or higher and 950 °C or lower at an average cooling rate of 20 °C/s or higher and 100 °C/s or lower) and then coiled at a coiling temperature of 400 °C or higher and 700 °C or lower to form a hot-rolled sheet having a predetermined size and shape. The sheet width of the obtained hot-rolled sheet can be adjusted by slitting or by edge trimming at the entry side of the hot-rolled sheet annealing process. In the hot rolling and annealing process, the width of the hot rolled sheet when it enters the annealing furnace is usually 600 mm or more and 2000 mm or less, and the same applies to the hot-rolled and annealed sheet.

### <Hot-rolled sheet annealing process>

The hot-rolled sheet annealing process is a process in which the hot-rolled sheet is heated and held at a high temperature to normalize the hot-rolled sheet, thereby obtaining a hot-rolled and annealed sheet. In the method of producing a hot-rolled and annealed sheet of the present disclosure, a hot-rolled sheet that has undergone the hot rolling process is heated and held at an appropriate holding temperature T₁ required for recrystallization of the hot-rolled sheet at the sheet width central portion thereof, and the hot-rolled sheet is then cooled, while simultaneously setting the maximum arrival temperature T₂ at a position 10 mm from the sheet width edge to satisfy the condition T₁ - T₂ ≥ 20 °C at least at one of the sheet width edges of the hot-rolled sheet. The maximum arrival temperature T₂ at a position 10 mm from the sheet width edge may satisfy the condition T₁ - T₂ ≥ 20 °C at both sheet width edges.

### (Maximum arrival temperature T₂ at position 10 mm from sheet width edge: T₁ - T₂ ≥ 20 °C)

In the hot-rolled sheet annealing process, the maximum arrival temperature T₂ at a position 10 mm from the sheet width edge is limited to T₁ - T₂ ≥ 20 °C. When T₁ - T₂ < 20 °C, the difference in crystal grain size between the sheet width central portion and the region near the sheet width edge becomes small, and the ratio d_{C}/d_{E} of the average grain size d_{C} at the sheet width central portion to the average grain size d_{E} at a position 10 mm from the sheet width edge cannot be made 1.2 or more. Preferably, T₁ - T₂ ≥ 35 °C is satisfied. More preferably, T₁ - T₂ ≥ 50 °C is satisfied.

A preferred embodiment of the hot-rolled sheet annealing process in the method of producing a hot-rolled and annealed sheet of the present disclosure will be further described below. Unless otherwise specified, the term "sheet width edge" refers to the sheet width edge at which the maximum arrival temperature T₂ is controlled to satisfy T₁ - T₂ ≥ 20 °C.

### (Holding temperature T₁ at the sheet width central portion: 900 °C or higher and 1100 °C or lower)

In the hot-rolled sheet annealing process, the holding temperature T₁ at the sheet width central portion is preferably set to 900 °C or higher. The holding temperature T₁ is preferably set to 1100 °C or lower. If T₁ is 900 °C or higher, it is easy to prevent the crystal grain size at the sheet width central portion from becoming excessively fine, and if T₁ is 1100 °C or lower, it is easy to prevent the grain size from becoming excessively coarse. Therefore, by setting T₁ in the above range, the average grain size dc at the sheet width central portion can easily be set to 70 µm or more and 300 µm or less.

### (Holding time t₁ at holding temperature T₁ in sheet width central portion: 2 s or longer and 120 s or shorter)

In the hot-rolled sheet annealing process, the holding time t₁ at the holding temperature T₁ in the sheet width central portion is preferably set to 2 s or longer. The holding time t₁ is preferably set to 120 s or shorter. If t₁ is 2 s or longer, recrystallization and grain growth due to hot-rolled sheet annealing are sufficient, and the average grain size dc at the sheet width central portion can easily be made 70 µm or more. Also, if t₁ is 120 s or shorter, the temperature profile in the sheet transverse direction does not become excessively flat, and the average grain size gradient in the sheet transverse direction can easily be made 0.2 µm/mm or more.

### (Maximum arrival temperature T₂ at position 10 mm from the sheet width edge: 750 °C or higher and 1000 °C or lower)

In the hot-rolled sheet annealing process, the maximum arrival temperature T₂ at a position 10 mm from the sheet width edge is preferably set to 750 °C or higher. The maximum arrival temperature T₂ is preferably set to 1000 °C or lower. If T₂ is 750 °C or higher, it is easy to prevent the crystal grain size in the region near the sheet width edge from becoming excessively fine, and the average grain size d_{E} at a position 10 mm from the sheet width edge can easily be made 10 µm or more. Also, if T₂ is 1000 °C or lower, d_{E} can easily be made 200 µm or less.

### (Time t₂ during which temperature at a position 10 mm from the sheet width edge is equal to or higher than maximum arrival temperature T₂ - 50 °C: 5 s or longer and 50 s or shorter)

In the hot-rolled sheet annealing process, the time t₂ during which the temperature at a position 10 mm from the sheet width edge is equal to or higher than the maximum arrival temperature T₂ - 50 °C is preferably limited to 5 s or longer. The time t₂ is preferably limited to 20 s or shorter. If t₂ is 5 s or longer, cooling after the maximum arrival temperature T₂ is reached at a position 10 mm from the sheet width edge can be appropriately controlled, the temperature profile in the sheet transverse direction does not become excessively steep, and the average grain size gradient in the sheet transverse direction can easily be set to 1.5 µm/mm or less. Also, if t₂ is 50 s or shorter, the temperature profile in the sheet transverse direction does not become excessively flat, and the average grain size gradient in the sheet transverse direction can easily be set to 0.2 µm/mm or more.

### (Heating suppression region between the sheet width edge and a position X₁ mm from the sheet width edge)

To intentionally vary the temperature in the sheet transverse direction in the hot-rolled sheet annealing process, a heating suppression region can be set. Examples of suitable techniques include preventing overheating by weakening the burner heating only in the region near the sheet width edge, preventing overheating by shielding the edge with an edge cover, applying a temperature rise prevention material that has low emissivity and can reduce radiant heating, and reducing the emissivity by removing the mill scale only in the region near the sheet width edge, thereby preventing a rise in temperature. Techniques are not limited to these, and any technique may be used as long as it can intentionally change the temperature. A heating suppression region is preferably between the sheet width edge and a position X₁ mm from the sheet width edge, where X₁ is in the range of 20 mm or more and 250 mm or less. If X₁ is 20 mm or more, the temperature rise due to heat conduction at a position 10 mm from the sheet width edge is appropriate, and T₁ - T₂ can be easily set to 20 °C or higher. Furthermore, if X₁ is 250 mm or less, the position at which the average grain size gradient in the sheet transverse direction reaches its maximum can easily be controlled to be within 200 mm from the sheet width edge. X₁ is more preferably 40 mm or more. X₁ is more preferably 150 mm or less. The heat suppression region is preferably provided near at least at one of the sheet width edges. The heat suppression region is more preferably provided near both sheet width edges.

### <Pickling process>

The method of producing a hot-rolled and annealed sheet of the present disclosure may include a pickling process. Here, the pickling process is a process of subjecting the hot-rolled sheet after the hot-rolled sheet annealing process to pickling. The pickling process is not particularly limited as long as it is a process that can pickle the steel sheet to an extent that the steel sheet can be cold-rolled after pickling, and for example, a known pickling process using hydrochloric acid, sulfuric acid, or the like can be applied. When the hot-rolled sheet annealing process is performed, this pickling process may be performed continuously in the same line as the hot-rolled sheet annealing process or may be performed in a separate line. The hot-rolled and annealed sheet in the present disclosure includes both a state in which pickling has not been performed (mill scale) and a state in which pickling has been performed (descaled).

### (Method of producing non-oriented electrical steel sheet)

The method of producing a non-oriented electrical steel sheet of the present disclosure generally comprises sequentially subjecting the hot-rolled and annealed sheet of the present disclosure to cold rolling and cold-rolled sheet annealing. The method of producing a non-oriented electrical steel sheet of the present disclosure is not particularly limited as long as the hot-rolled and annealed sheet of the present disclosure is used, and known techniques can be applied.

### <Cold rolling process>

The cold rolling process is a process of cold rolling the hot-rolled and annealed sheet (pickled sheet) that has been subjected to the aforementioned pickling. In the cold rolling step, the hot-rolled and annealed sheet that has been subjected to the pickling is subjected to cold rolling to obtain a cold-rolled sheet. There are no particular limitations on the process as long as it is a process that can obtain a cold-rolled sheet of predetermined dimensions by cold rolling, and any known cold rolling process can be applied.

An example of the cold rolling process is a cold rolling process in which a pickled sheet is rolled using a four-stand tandem mill under conditions of a total rolling reduction of 80 % or more and less than 95 % to yield a cold-rolled sheet of a predetermined size and shape.

### <Annealing process>

The annealing process is a process in which the cold-rolled sheet that has been subjected to the cold rolling process is annealed to obtain a cold-rolled annealed sheet. The annealing process is not particularly limited as long as it is a process in which the cold-rolled sheet is heated, held, and cooled to obtain a cold-rolled and annealed sheet, and any known annealing process can be applied. Generally, an insulating coating is applied to the surface after the annealing step, but the method and type of coating are not particularly limited, and any known insulating coating process can be applied.

An example of the annealing process is to heat the cold-rolled sheet to a temperature of 800 °C or higher and 1200 °C or lower in a non-oxidizing atmosphere, hold at this temperature for 5 s to 60 s, and then cool the sheet.

Although the case in which the hot-rolled and annealed sheet of the present disclosure is applied to the production of a non-oriented electrical steel sheet has been described, the hot-rolled and annealed sheet of the present disclosure can also be applied to the production of a grain-oriented electrical steel sheet.

### EXAMPLES

The present disclosure is described in detail below by reference to examples. However, the present disclosure is not limited to these examples.

### <Production of hot-rolled and annealed sheet>

Molten steels having the chemical compositions listed in Tables 1 and 2 were melted by a commonly known method and continuously cast into slabs (steel material) having a thickness of 230 mm. The obtained slabs were subjected to hot rolling to obtain hot-rolled sheets having a thickness of 2.0 mm (width of 1200 mm). The obtained hot-rolled sheets were subjected to hot-rolled sheet annealing and pickling under the conditions listed in Tables 3 and 4 to obtain hot-rolled and annealed sheets (pickled sheets). Heating suppression regions were provided near both sheet width edges, and similar control was performed.

### <Production of cold-rolled sheets>

The hot-rolled and annealed sheets (pickled sheet) were cold-rolled at room temperature using a reverse rolling mill to obtain cold-rolled sheets (non-oriented electrical steel sheets) having a thickness of 0.25 mm.

### <Production of cold-rolled and annealed sheets>

The cold-rolled sheets were annealed by a known method of holding at 1000 °C for 10 s in a non-oxidizing atmosphere, and an insulating coating was then applied by a known method to obtain cold-rolled and annealed sheets (non-oriented electrical steel sheets).

### [Table 1]

**Table 1**

| Steel sample ID | Chemical composition (mass%)* | | | | | | | | | | | | | | | | | Remarks |
|---|---|---|---|---|---|---|---|---|---|---|---|---|---|---|---|---|---|---|
| | C | Si | Mn | P | S | Al | N | Zn | Mo | Ni | Cr | Cu | Ca | Mg | REM | Sn | Sb | |
| A | 0.0031 | 3.8 | 0.2 | 0.013 | 0.0008 | 0.3 | 0.0020 | - | - | - | - | - | - | - | - | - | - | Conforming Example |
| B | 0.0023 | 3.6 | 0.2 | 0.010 | 0.0010 | 1.0 | 0.0016 | - | - | - | - | - | - | - | - | - | - | Conforming Example |
| C | 0.0023 | 3.3 | 0.7 | 0.005 | 0.0017 | 0.9 | 0.0022 | - | - | - | - | - | - | - | - | - | - | Conforming Example |
| D | 0.0029 | 3.2 | 1.7 | 0.005 | 0.0033 | 0.9 | 0.0016 | - | - | - | - | - | - | - | - | - | - | Conforming Example |
| E | 0.0021 | 2.8 | 1.7 | 0.005 | 0.0030 | 0.8 | 0.0031 | - | - | - | - | - | - | - | - | - | - | Conforming Example |
| F | 0.0005 | 2.5 | 1.2 | 0.012 | 0.0033 | 0.5 | 0.0016 | - | - | - | - | - | - | - | - | - | - | Conforming Example |
| G | 0.0026 | 2.3 | 0.4 | 0.004 | 0.0012 | 0.11 | 0.0019 | - | - | - | - | - | - | - | - | - | - | Conforming Example |
| H | 0.0022 | 2.0 | 1.6 | 0.018 | 0.0028 | 0.8 | 0.0021 | - | - | - | - | - | - | - | - | - | - | Conforming Example |
| I | 0.0038 | 2.1 | 0.4 | 0.003 | 0.0015 | 0.13 | 0.0015 | - | - | - | - | - | - | - | - | - | - | Conforming Example |
| J | 0.0009 | 3.9 | 0.7 | 0.011 | 0.0023 | 1.5 | 0.0026 | - | - | - | - | - | - | - | - | - | - | Conforming Example |
| K | 0.0089 | 1.9 | 1.7 | 0.018 | 0.0025 | 0.8 | 0.0022 | - | - | - | - | - | - | - | - | - | - | Conforming Example |
| L | 0.0011 | 0.9 | 0.8 | 0.013 | 0.0018 | 1.6 | 0.0024 | - | - | - | - | - | - | - | - | - | - | Comparative Example |
| M | 0.0011 | 1.1 | 0.7 | 0.012 | 0.0027 | 1.6 | 0.0025 | - | - | - | - | - | - | - | - | - | - | Conforming Example |
| O | 0.0011 | 4.9 | 0.6 | 0.012 | 0.0019 | 1.5 | 0.0027 | - | - | - | - | - | - | - | - | - | - | Conforming Example |
| P | 0.0007 | 5.3 | 0.8 | 0.009 | 0.0025 | 1.5 | 0.0027 | - | - | - | - | - | - | - | - | - | - | Comparative Example |
| Q | 0.0031 | 3.2 | 0.03 | 0.006 | 0.0034 | 1.0 | 0.0017 | - | - | - | - | - | - | - | - | - | - | Comparative Example |
| R | 0.0029 | 3.2 | 0.06 | 0.007 | 0.0029 | 0.8 | 0.0017 | - | - | - | - | - | - | - | - | - | - | Conforming Example |
| S | 0.0027 | 3.2 | 3.7 | 0.006 | 0.0033 | 0.9 | 0.0016 | - | - | - | - | - | - | - | - | - | - | Conforming Example |
| T | 0.0029 | 3.1 | 5.2 | 0.003 | 0.0035 | 0.9 | 0.0018 | - | - | - | - | - | - | - | - | - | - | Comparative Example |
| U | 0.0039 | 2.1 | 0.5 | 0.004 | 0.0013 | 0.002 | 0.0014 | - | - | - | - | - | - | - | - | - | - | Conforming Example |
| W | 0.0039 | 2.2 | 0.3 | 0.005 | 0.0019 | 2.1 | 0.0015 | - | - | - | - | - | - | - | - | - | - | Conforming Example |
| X | 0.0037 | 2.1 | 0.4 | 0.003 | 0.0011 | 3.2 | 0.0014 | - | - | - | - | - | - | - | - | - | - | Comparative Example |
| Y | 0.0007 | 3.8 | 0.8 | 0.013 | 0.0021 | 1.5 | 0.0078 | - | - | - | - | - | - | - | - | - | - | Conforming Example |
| Z | 0.0132 | 4.0 | 0.6 | 0.009 | 0.0020 | 1.4 | 0.0017 | - | - | - | - | - | - | - | - | - | - | Comparative Example |
| AA | 0.0007 | 3.8 | 0.7 | 0.11 | 0.0018 | 1.6 | 0.0017 | - | - | - | - | - | - | - | - | - | - | Comparative Example |
| AB | 0.0010 | 3.9 | 0.7 | 0.012 | 0.012 | 1.5 | 0.0015 | - | - | - | - | - | - | - | - | - | - | Comparative Example |
| AC | 0.0009 | 3.9 | 0.7 | 0.012 | 0.0025 | 1.6 | 0.0092 | - | - | - | - | - | - | - | - | - | - | Comparative Example |
| AD | 0.0022 | 3.3 | 0.7 | 0.003 | 0.0021 | 0.9 | 0.0022 | 0.0006 | - | - | - | - | - | - | - | - | - | Conforming Example |
| AE | 0.0021 | 3.3 | 0.7 | 0.005 | 0.0018 | 0.8 | 0.0024 | 0.0048 | - | - | - | - | - | - | - | - | - | Conforming Example |
| AF | 0.0021 | 3.2 | 0.7 | 0.005 | 0.0017 | 0.8 | 0.0022 | 0.019 | - | - | - | - | - | - | - | - | - | Conforming Example |
| AG | 0.0022 | 3.3 | 0.8 | 0.003 | 0.0021 | 0.9 | 0.0020 | - | 0.002 | - | - | - | - | - | - | - | - | Conforming Example |
| AH | 0.0023 | 3.4 | 0.8 | 0.004 | 0.0020 | 0.9 | 0.0022 | - | 0.19 | - | - | - | - | - | - | - | - | Conforming Example |
| AI | 0.0022 | 3.2 | 0.6 | 0.004 | 0.0014 | 0.9 | 0.0023 | - | - | 0.015 | - | - | - | - | - | - | - | Conforming Example |
| AJ | 0.0022 | 3.3 | 0.7 | 0.003 | 0.0022 | 0.9 | 0.0024 | - | - | 0.95 | - | - | - | - | - | - | - | Conforming Example |
| AK | 0.0023 | 3.3 | 0.8 | 0.003 | 0.002 1 | 0.8 | 0.0020 | - | - | - | 0.03 | - | - | - | - | - | - | Conforming Example |
| AL | 0.002 1 | 3.2 | 0.8 | 0.004 | 0.0018 | 1.0 | 0.0020 | - | - | - | 0.12 | - | - | - | - | - | - | Conforming Example |
| AM | 0.0022 | 3.3 | 0.8 | 0.006 | 0.0018 | 0.8 | 0.0023 | - | - | - | 4.7 | - | - | - | - | - | - | Conforming Example |
| AN | 0.0031 | 3.8 | 0.3 | 0.014 | 0.0009 | 0.4 | 0.0020 | - | - | - | - | 0.007 | - | - | - | - | - | Conforming Example |
| AO | 0.0033 | 3.7 | 0.3 | 0.013 | 0.0004 | 0.3 | 0.0022 | - | - | - | - | 0.92 | - | - | - | - | - | Conforming Example |
| AP | 0.0031 | 3.8 | 0.2 | 0.014 | 0.0010 | 0.3 | 0.0020 | - | - | - | - | - | 0.0002 | - | - | - | - | Conforming Example |
| AQ | 0.0029 | 3.7 | 0.2 | 0.011 | 0.0008 | 0.3 | 0.0020 | - | - | - | - | - | 0.093 | - | - | - | - | Conforming Example |
| AR | 0.0030 | 3.8 | 0.2 | 0.012 | 0.0009 | 0.2 | 0.0020 | - | - | - | - | - | - | 0.0004 | - | - | - | Conforming Example |
| AS | 0.0031 | 3.8 | 0.3 | 0.014 | 0.0011 | 0.2 | 0.0019 | - | - | - | - | - | - | 0.087 | - | - | - | Conforming Example |
| AT | 0.0029 | 3.8 | 0.2 | 0.012 | 0.0009 | 0.3 | 0.0018 | - | - | - | - | - | - | - | 0.0008 | - | - | Conforming Example |
| AU | 0.0030 | 3.7 | 0.2 | 0.013 | 0.0011 | 0.3 | 0.0022 | - | - | - | - | - | - | - | 0.088 | - | - | Conforming Example |
| AV | 0.0030 | 3.9 | 0.2 | 0.015 | 0.0013 | 0.3 | 0.0020 | - | - | - | - | - | - | - | - | 0.003 | - | Conforming Example |
| AW | 0.0033 | 3.8 | 0.2 | 0.015 | 0.0007 | 0.2 | 0.0021 | - | - | - | - | - | - | - | - | 0.18 | - | Conforming Example |
| AX | 0.0033 | 3.7 | 0.2 | 0.015 | 0.0008 | 0.2 | 0.0018 | - | - | - | - | - | - | - | - | - | 0.004 | Conforming Example |
| AY | 0.0032 | 3.7 | 0.3 | 0.012 | 0.0006 | 0.3 | 0.0018 | - | - | - | - | - | - | - | - | - | 0.17 | Conforming Example |

| | | | | | | | | | | | | | | | | | | |
|---|---|---|---|---|---|---|---|---|---|---|---|---|---|---|---|---|---|---|
| * The balance is Fe and inevitable impurities Underlining indicates values outside scope of disclosure. | | | | | | | | | | | | | | | | | | |

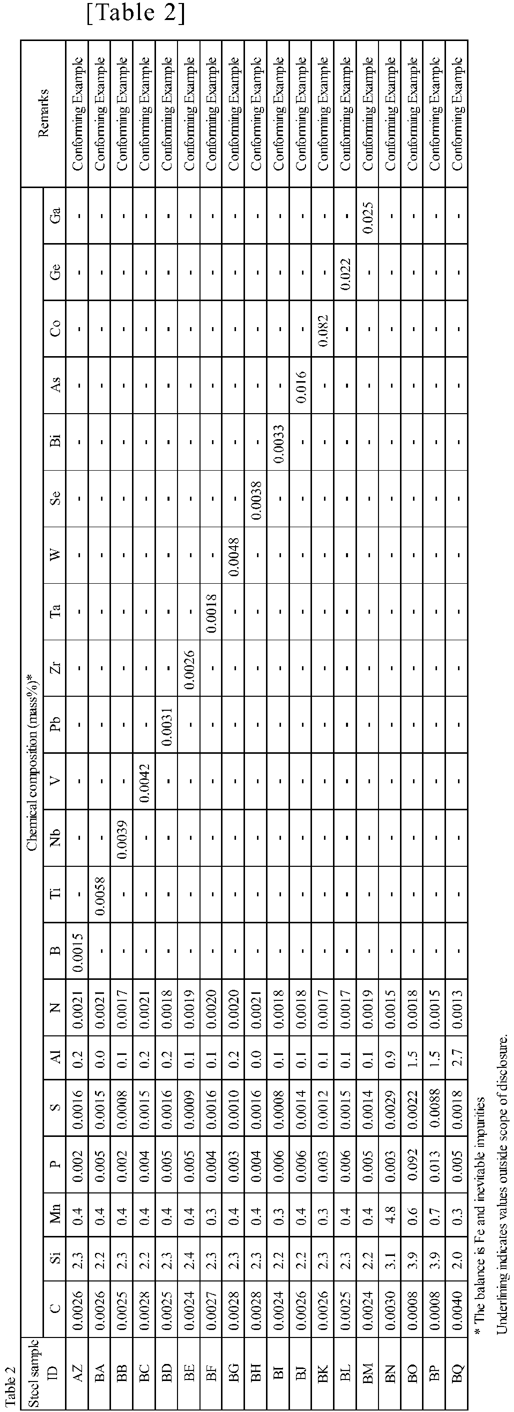

### [Table 3]

**Table 3**

| No. | Steel sample ID | Sheet thickness [mm] | Hot-rolled sheet annealing process | | | | | | | Remarks |
|---|---|---|---|---|---|---|---|---|---|---|
| | | | Holding temperature T₁ at sheet width central portion [°C] | Maximum arrival temperature T₂ at position 10 mm from sheet width edge [°C] | T₁ - T₂ [°C] | Holding time t₁ at T₁ in sheet width central portion [s] | Time t₂ during which temperature at a position 10 mm from sheet width edge is equal to or higher than T₂ - 50 °C [s] | X₁ in heating suppression region (between sheet width edge and position X₁ mm from sheet width edge) [mm] | Heating suppression method at edge | |
| 1 | A | 0.25 | 1030 | 880 | 150 | 64 | 27 | 80 | Edge cover used | Example |
| 2 | B | 0.25 | 960 | 825 | 135 | 19 | 25 | 60 | Edge cover used | Example |
| 3 | C | 0.25 | 1030 | 885 | 145 | 9 | 20 | 120 | Edge cover used | Example |
| 4 | D | 0.25 | 960 | 830 | 130 | 58 | 38 | 50 | Edge cover used | Example |
| 5 | E | 0.25 | 965 | 830 | 135 | 24 | 17 | 110 | Edge cover used | Example |
| 6 | F | 0.25 | 990 | 860 | 130 | 21 | 22 | 130 | Edge cover used | Example |
| 7 | G | 0.25 | 965 | 895 | 70 | 38 | 33 | 90 | Low emissivity due to removal of mill scale | Example |
| 8 | H | 0.25 | 1000 | 880 | 120 | 26 | 36 | 60 | Edge cover used | Example |
| 9 | I | 0.25 | 1015 | 880 | 135 | 65 | 11 | 40 | Edge cover used | Example |
| 10 | J | 0.25 | 1015 | 915 | 100 | 33 | 18 | 70 | Edge cover used | Example |
| 11 | K | 0.25 | 1000 | 875 | 125 | 27 | 37 | 60 | Edge cover used | Example |
| 12 | L | 0.25 | 1020 | 920 | 100 | 32 | 18 | 70 | Edge cover used | Comparative Example |
| 13 | M | 0.25 | 1020 | 910 | 110 | 31 | 18 | 70 | Edge cover used | Example |
| 14 | O | 0.25 | 1015 | 910 | 105 | 33 | 19 | 70 | Edge cover used | Example |
| 15 | P | 0.25 | 1020 | 915 | 105 | 34 | 18 | 70 | Edge cover used | Comparative Example |
| 16 | Q | 0.25 | 955 | 820 | 135 | 60 | 38 | 60 | Edge cover used | Comparative Example |
| 17 | R | 0.25 | 955 | 830 | 125 | 57 | 38 | 50 | Edge cover used | Example |
| 18 | S | 0.25 | 955 | 825 | 130 | 59 | 37 | 60 | Edge cover used | Example |
| 19 | T | 0.25 | 960 | 830 | 130 | 60 | 39 | 50 | Edge cover used | Comparative Example |
| 20 | U | 0.25 | 1015 | 885 | 130 | 66 | 9 | 40 | Edge cover used | Example |
| 21 | W | 0.25 | 1015 | 875 | 140 | 66 | 11 | 40 | Edge cover used | Example |
| 22 | X | 0.25 | 1010 | 875 | 135 | 65 | 12 | 40 | Edge cover used | Comparative Example |
| 23 | Y | 0.25 | 1015 | 915 | 100 | 33 | 17 | 80 | Edge cover used | Example |
| 24 | Z | 0.25 | 1025 | 915 | 110 | 31 | 17 | 70 | Edge cover used | Comparative Example |
| 25 | AA | 0.25 | 1020 | 920 | 100 | 30 | 18 | 70 | Edge cover used | Comparative Example |
| 26 | AB | 0.25 | 1020 | 915 | 105 | 33 | 18 | 70 | Edge cover used | Comparative Example |
| 27 | AC | 0.25 | 1015 | 920 | 95 | 33 | 19 | 70 | Edge cover used | Comparative Example |
| 28 | AD | 0.25 | 1030 | 885 | 145 | 10 | 19 | 130 | Edge cover used | Example |
| 29 | AE | 0.25 | 1025 | 870 | 155 | 11 | 19 | 130 | Edge cover used | Example |
| 30 | AF | 0.25 | 1025 | *885* | 140 | 7 | 19 | 120 | Edge cover used | Example |
| 31 | AG | 0.25 | 1025 | 885 | 140 | 7 | 19 | 120 | Edge cover used | Example |
| 32 | AH | 0.25 | 1030 | 890 | 140 | 7 | 19 | 120 | Edge cover used | Example |
| 33 | AI | 0.25 | 1040 | 895 | 145 | 10 | 19 | 120 | Edge cover used | Example |
| 34 | AJ | 0.25 | 1025 | 885 | 140 | 9 | 20 | 120 | Edge cover used | Example |
| 35 | AK | 0.25 | 1025 | 880 | 145 | 11 | 20 | 130 | Edge cover used | Example |
| 36 | AL | 0.25 | 1025 | 880 | 145 | 11 | 20 | 130 | Edge cover used | Example |
| 37 | AM | 0.25 | 1040 | 900 | 140 | 8 | 20 | 120 | Edge cover used | Example |
| 38 | AN | 0.25 | 1035 | 875 | 160 | 65 | 26 | 80 | Edge cover used | Example |
| 39 | AO | 0.25 | 1040 | 885 | 155 | 63 | 27 | 80 | Edge cover used | Example |
| 40 | AP | 0.25 | 1025 | 865 | 160 | 64 | 27 | 80 | Edge cover used | Example |
| 41 | AQ | 0.25 | 1040 | 890 | 150 | 66 | 27 | 80 | Edge cover used | Example |
| 42 | AR | 0.25 | 1040 | 895 | 145 | 63 | 27 | 80 | Edge cover used | Example |
| 43 | AS | 0.25 | 1035 | 875 | 160 | 63 | 28 | 80 | Edge cover used | Example |
| 44 | AT | 0.25 | 1025 | 865 | 160 | 63 | 26 | 80 | Edge cover used | Example |
| 45 | AU | 0.25 | 1035 | 875 | 160 | 65 | 28 | 80 | Edge cover used | Example |
| 46 | AV | 0.25 | 1025 | 865 | 160 | 63 | 26 | 90 | Edge cover used | Example |
| 47 | AW | 0.25 | 1040 | 890 | 150 | 65 | 28 | 70 | Edge cover used | Example |
| 48 | AX | 0.25 | 1040 | 895 | 145 | 62 | 28 | 80 | Edge cover used | Example |
| 49 | AY | 0.25 | 1030 | 885 | 145 | 65 | 26 | 80 | Edge cover used | Example |
| 50 | B | 0.25 | 960 | 945 | 15 | 17 | 25 | 50 | Edge cover used | Comparative Example |
| 51 | B | 0.25 | 960 | 930 | 30 | 19 | 25 | 60 | Edge cover used | Example |
| 52 | B | 0.25 | 950 | 905 | 45 | 21 | 26 | 50 | Edge cover used | Example |
| 53 | B | 0.25 | 880 | 760 | 120 | 20 | 24 | 60 | Edge cover used | Example |
| 54 | B | 0.25 | 910 | 780 | 130 | 21 | 24 | 50 | Edge cover used | Example |
| 55 | B | 0.25 | 1090 | 950 | 140 | 18 | 25 | 60 | Edge cover used | Example |
| 56 | B | 0.25 | 1110 | 980 | 130 | 21 | 25 | 60 | Edge cover used | Example |
| 57 | E | 0.25 | 910 | 730 | 180 | 26 | 18 | 110 | Edge cover used | Example |
| 58 | E | 0.25 | 960 | 810 | 150 | 25 | 15 | 110 | Edge cover used | Example |
| 59 | E | 0.25 | 1020 | 960 | 60 | 26 | 17 | 120 | Edge cover used | Example |
| 60 | E | 0.25 | 1080 | 1020 | 60 | 26 | 16 | 110 | Edge cover used | Example |
| 61 | E | 0.25 | 960 | 825 | 135 | 1 | 17 | 110 | Edge cover used | Example |
| 62 | E | 0.25 | 975 | 830 | 145 | 2 | 16 | 120 | Edge cover used | Example |
| 63 | E | 0.25 | 960 | 825 | 135 | 105 | 17 | 110 | Edge cover used | Example |
| 64 | E | 0.25 | 970 | 840 | 130 | 129 | 16 | 110 | Edge cover used | Example |
| 65 | G | 0.25 | 965 | 890 | 75 | 39 | 3 | 90 | Low emissivity due to removal of mill scale | Example |
| 66 | G | 0.25 | 965 | 885 | 80 | 38 | 6 | 90 | Low emissivity due to removal of mill scale | Example |
| 67 | G | 0.25 | 970 | 905 | 65 | 37 | 47 | 80 | Low emissivity due to removal of mill scale | Example |
| 68 | G | 0.25 | 965 | 900 | 65 | 40 | 59 | 90 | Low emissivity due to removal of mill scale | Example |
| 69 | G | 0.25 | 975 | 945 | 30 | 39 | 32 | 10 | Low emissivity due to removal of mill scale | Example |
| 70 | G | 0.25 | 965 | 920 | 45 | 39 | 32 | 20 | Low emissivity due to removal of mill scale | Example |
| 71 | G | 0.25 | 965 | 885 | 80 | 36 | 32 | 230 | Low emissivity due to removal of mill scale | Example |
| 72 | G | 0.25 | 965 | 885 | 80 | 36 | 34 | 260 | Low emissivity due to removal of mill scale | Example |

| | | | | | | | | | | |
|---|---|---|---|---|---|---|---|---|---|---|
| Note: Underlining indicates values outside scope of disclosure | | | | | | | | | | |

### [Table 4]

**Table 4**

| No. | Steel sample ID | Sheet thickness [mm] | Hot-rolled sheet annealing process | | | | | | | Remarks |
|---|---|---|---|---|---|---|---|---|---|---|
| | | | Holding temperature T₁ at sheet width central portion [°C] | Maximum arrival temperature T₂ at position 10 mm from sheet width edge [°C] | T₁ - T₂ [°C] | Holding time t₁ at T₁ in sheet width central portion [s] | Time t₂ during which temperature at a position 10 mm from sheet width edge is equal to or higher than T₂ - 50 °C [s] | X₁ in heating suppression region (between sheet width edge and position X₁ mm from sheet width edge) [mm] | Heating suppression method at edge | |
| 73 | AZ | 0.25 | 975 | 900 | 75 | 36 | 32 | 90 | Low emissivity due to removal of mill scale | Example |
| 74 | BA | 0.25 | 960 | 880 | 80 | 40 | 34 | 90 | Low emissivity due to removal of mill scale | Example |
| 75 | BB | 0.25 | 970 | 900 | 70 | 37 | 32 | 80 | Low emissivity due to removal of mill scale | Example |
| 76 | BC | 0.25 | 975 | 910 | 65 | 37 | 34 | 100 | Low emissivity due to removal of mill scale | Example |
| 77 | BD | 0.25 | 965 | 885 | 80 | 39 | 32 | 80 | Low emissivity due to removal of mill scale | Example |
| 78 | BE | 0.25 | 965 | 890 | 75 | 39 | 34 | 100 | Low emissivity due to removal of mill scale | Example |
| 79 | BF | 0.25 | 965 | 890 | 75 | 41 | 33 | 90 | Low emissivity due to removal of mill scale | Example |
| 80 | BG | 0.25 | 965 | 885 | 80 | 36 | 34 | 90 | Low emissivity due to removal of mill scale | Example |
| 81 | BH | 0.25 | 965 | 890 | 75 | 37 | 32 | 80 | Low emissivity due to removal of mill scale | Example |
| 82 | BI | 0.25 | 965 | 885 | 80 | 38 | 34 | 90 | Low emissivity due to removal of mill scale | Example |
| 83 | BJ | 0.25 | 970 | 895 | 75 | 39 | 34 | 90 | Low emissivity due to removal of mill scale | Example |
| 84 | BK | 0.25 | 960 | 895 | 65 | 38 | 34 | 90 | Low emissivity due to removal of mill scale | Example |
| 85 | BL | 0.25 | 970 | 895 | 75 | 38 | 34 | 90 | Low emissivity due to removal of mill scale | Example |
| 86 | BM | 0.25 | 970 | 905 | 65 | 40 | 34 | 90 | Low emissivity due to removal of mill scale | Example |
| 87 | BN | 0.25 | 965 | 825 | 140 | 58 | 39 | 50 | Edge cover used | Example |
| 88 | BO | 0.25 | 1025 | 930 | 95 | 33 | 17 | 80 | Edge cover used | Example |
| 89 | BP | 0.25 | 1020 | 925 | 95 | 30 | 17 | 70 | Edge cover used | Example |
| 90 | BQ | 0.25 | 1015 | 915 | 100 | 32 | 18 | 70 | Edge cover used | Example |

| | | | | | | | | | | |
|---|---|---|---|---|---|---|---|---|---|---|
| Note: Underlining indicates values outside scope of disclosure | | | | | | | | | | |

### <Evaluation>

### (Microstructure observation)

Test pieces for observing the microstructure were taken from the sheet width central portion from the obtained hot-rolled and annealed sheets. In addition, near one of the sheet width edges, test pieces for microstructure observation were taken continuously at 20 mm intervals from a position 10 mm from the sheet width edge to a position 410 mm from the sheet width edge. Next, the collected test pieces were embedded in resin, with the surface perpendicular to the rolling direction (RD surface) as the observation plane, and polished to a mirror finish by colloidal silica polishing. Electron backscatter diffraction (EBSD) measurements were performed on the mirror-polished observation plane to obtain local orientation data. At this time, the step size was 2 µm and the measurement area was 10 mm² or more. The measurement may be performed in one scan of the entire area, or the results of a plurality of scans may be combined using the Combo Scan function. The obtained local orientation data were analyzed using OIM Analysis 8 analysis software.

Prior to data analysis, coordinate rotation processing was performed so that the sample coordinate system had the Al axis as the rolling direction, the A2 axis as the direction orthogonal to the rolling direction, and the A3 axis as the sheet surface direction. In addition, in the Partition Properties of the analysis software, the grain average data points were selected under the condition of Formula: GCI[&;5.000,2,0.000,0,0,8.0,1,1,1.0,0;] > 0.1, and data points unsuitable for analysis were excluded. At this time, 98 % or more of the data points were valid.

For the data adjusted as above, the following analysis was performed, defining the crystal grain boundary as follows: Grain Tolerance Angle of 5°, Minimum Grain Size of 2, Minimum Anti-Grain Size of 2, and Multiple Rows Requirement and Anti-Grain Multiple Rows Requirement both OFF.

The Area Average value obtained using the Grain Size (diameter) function for the preprocessed data was used as the average grain size.

When the average grain size at a position X₁ mm from the sheet width edge is D₁ µm and the average grain size at the adjacent measurement point, that is, a position X₁ + 20 mm from the sheet width edge, is D₂ µm, the average grain size gradient at a position X₁ + 10 mm from the edge was defined as (D₂ - D₁)/10 [µm/mm], and the maximum value in the sheet transverse direction was taken as the maximum average grain size gradient.

### (Rollability evaluation)

The number of edge cracks per 1000 m of the obtained cold-rolled sheets was examined. The number N of edge cracks with a crack length of 2 mm or more was counted. When the number of edge cracks per 1000 m was 2 or less, the cold rolling manufacturability was determined to be good.

### (Magnetic property evaluation)

Test pieces for magnetic property measurement each 30 mm wide and 280 mm long were taken from the obtained cold-rolled and annealed sheets, with the length direction aligned with the rolling direction and the direction orthogonal to the rolling direction. The magnetic flux density B₅₀ and iron loss W_{10/400} of the cold-rolled annealed sheets were measured by Epstein's method in accordance with JIS C2550-1:2011. In a case in which B₅₀ ≥ 1.50 (T) and B50/Bs ≥ 0.81, the magnetic flux density was evaluated as good, and in a case in which W_{10/400} ≤ 15.0 (W/kg), the iron loss characteristics were evaluated as good.

### [Table 5]

**Table 5**

| No. | Steel sheet microstructure | | | | | Cold rolling characteristics | | Magnetic properties of cold-rolled and annealed sheet | | | | Remarks |
|---|---|---|---|---|---|---|---|---|---|---|---|---|
| | Average grain size d_{C} at sheet width central portion [µm] | Average grain size d_{E} at position 10 mm from sheet width edge [µm] | d_{C}/d_{E} | Δdₘₐₓ [µm/mm] | X₂ [mm] | Cold-rolling fracture: yes or no | Number of edge cracks N [number] | Magnetic flux density Bs (T) | Magnetic flux density B₅₀ (T) | B₅₀/Bs | Iron loss W_{10/ 400} (W/kg) | |
| 1 | 224 | 90 | 2.5 | 3.4 | 60 | - | 0 | 1.98 | 1.68 | 0.85 | 11.0 | Example |
| 2 | 129 | 46 | 2.8 | 1.6 | 60 | - | 0 | 1.96 | 1.66 | 0.85 | 10.5 | Example |
| 3 | 220 | 88 | 2.5 | 3.3 | 100 | - | 0 | 1.96 | 1.67 | 0.85 | 10.4 | Example |
| 4 | 124 | 56 | 2.2 | 1.8 | 40 | - | 0 | 1.94 | 1.65 | 0.85 | 9.8 | Example |
| 5 | 131 | 52 | 2.5 | 2.0 | 80 | - | 0 | 1.97 | 1.67 | 0.85 | 10.3 | Example |
| 6 | 165 | 66 | 2.5 | 2.4 | 100 | - | 0 | 2.00 | 1.70 | 0.85 | 11.6 | Example |
| 7 | 132 | 69 | 1.9 | 1.7 | 80 | - | 0 | 2.05 | 1.74 | 0.85 | 14.0 | Example |
| 8 | 179 | 81 | 2.2 | 2.0 | 60 | - | 0 | 2.00 | 1.70 | 0.85 | 11.4 | Example |
| 9 | 197 | 82 | 2.4 | 2.8 | 40 | - | 0 | 2.05 | 1.77 | 0.86 | 14.5 | Example |
| 10 | 196 | 115 | 1.7 | 1.9 | 60 | - | 0 | 1.91 | 1.60 | 0.84 | 8.9 | Example |
| 11 | 186 | 89 | 2.1 | 2.7 | 60 | - | 0 | 2.01 | 1.69 | 0.84 | 11.7 | Example |
| 12 | 211 | 96 | 2.2 | 3.1 | 60 | - | 0 | 2.03 | 1.73 | 0.85 | 15.7 | Comparative Example |
| 13 | 206 | 94 | 2.2 | 2.6 | 60 | - | 0 | 2.03 | 1.72 | 0.85 | 12.3 | Example |
| 14 | 201 | 106 | 1.9 | 2.4 | 60 | - | 0 | 1.87 | 1.55 | 0.83 | 8.3 | Example |
| 15 | 208 | 104 | 2.0 | 2.6 | 60 | - | 0 | 1.85 | 1.48 | 0.80 | 7.9 | Comparative Example |
| 16 | 126 | 53 | 2.4 | 1.4 | 60 | - | 0 | 1.98 | 1.68 | 0.85 | 15.6 | Comparative Example |
| 17 | 118 | 49 | 2.4 | 1.5 | 40 | - | 0 | 1.99 | 1.69 | 0.85 | 11.5 | Example |
| 18 | 117 | 47 | 2.5 | 1.4 | 60 | - | 0 | 1.90 | 1.62 | 0.85 | 8.6 | Example |
| 19 | 130 | 59 | 2.2 | 1.9 | 40 | - | 0 | 1.87 | 1.57 | 0.84 | 15.8 | Comparative Example |
| 20 | 201 | 77 | 2.6 | 2.7 | 40 | - | 0 | 2.06 | 1.73 | 0.84 | 14.8 | Example |
| 21 | 197 | 76 | 2.6 | 2.8 | 40 | - | 0 | 1.97 | 1.65 | 0.84 | 11.6 | Example |
| 22 | 192 | 69 | 2.8 | 2.9 | 40 | - | 0 | 1.92 | 1.65 | 0.86 | 15.6 | Comparative Example |
| 23 | 201 | 91 | 2.2 | 2.4 | 60 | - | 0 | 1.91 | 1.62 | 0.85 | 12.2 | Example |
| 24 | 215 | 93 | 2.3 | 2.7 | 60 | - | 0 | 1.91 | 1.62 | 0.85 | 15.9 | Comparative Example |
| 25 | 208 | 95 | 2.2 | 2.5 | 60 | yes | 2.3 | 1.91 | 1.62 | 0.85 | 9.0 | Comparative Example |
| 26 | 208 | 90 | 2.3 | 2.6 | 60 | - | 0 | 1.91 | 1.63 | 0.85 | 15.8 | Comparative Example |
| 27 | 201 | 91 | 2.2 | 2.4 | 60 | - | 0 | 1.90 | 1.62 | 0.85 | 15.9 | Comparative Example |
| 28 | 216 | 83 | 2.6 | 3.2 | 100 | - | 0 | 1.96 | 1.73 | 0.88 | 10.2 | Example |
| 29 | 217 | 83 | 2.6 | 3.4 | 100 | - | 0 | 1.96 | 1.73 | 0.88 | 10.3 | Example |
| 30 | 213 | 89 | 2.4 | 3.2 | 100 | - | 0 | 1.97 | 1.73 | 0.88 | 10.3 | Example |
| 31 | 218 | 109 | 2.0 | 2.9 | 100 | - | 0 | 1.96 | 1.67 | 0.85 | 10.2 | Example |
| 32 | 228 | 104 | 2.2 | 3.1 | 100 | - | 0 | 1.96 | 1.64 | 0.84 | 10.3 | Example |
| 33 | 233 | 97 | 2.4 | 3.4 | 100 | - | 0 | 1.97 | 1.67 | 0.85 | 10.6 | Example |
| 34 | 214 | 82 | 2.6 | 3.1 | 100 | - | 0 | 1.96 | 1.67 | 0.85 | 10.4 | Example |
| 35 | 213 | 89 | 2.4 | 2.7 | 100 | - | 0 | 1.96 | 1.67 | 0.85 | 10.2 | Example |
| 36 | 218 | 91 | 2.4 | 3.2 | 100 | - | 0 | 1.96 | 1.65 | 0.84 | 10.0 | Example |
| 37 | 241 | 100 | 2.4 | 3.3 | 100 | - | 0 | 1.96 | 1.67 | 0.85 | 10.3 | Example |
| 38 | 232 | 75 | 3.1 | 3.9 | 60 | - | 0 | 1.97 | 1.66 | 0.84 | 10.9 | Example |
| 39 | 242 | 90 | 2.7 | 3.5 | 60 | - | 0 | 1.98 | 1.66 | 0.84 | 11.2 | Example |
| 40 | 209 | 80 | 2.6 | 3.1 | 60 | - | 0 | 1.97 | 1.66 | 0.84 | 10.8 | Example |
| 41 | 232 | 86 | 2.7 | 3.4 | 60 | - | 0 | 1.98 | 1.66 | 0.84 | 10.9 | Example |
| 42 | 241 | 86 | 2.8 | 3.9 | 60 | - | 0 | 1.98 | 1.71 | 0.86 | 11.0 | Example |
| 43 | 232 | 97 | 2.4 | 3.3 | 60 | - | 0 | 1.98 | 1.66 | 0.84 | 11.1 | Example |
| 44 | 214 | 79 | 2.7 | 3.3 | 60 | - | 0 | 1.98 | 1.66 | 0.84 | 10.8 | Example |
| 45 | 232 | 77 | 3.0 | 4.1 | 60 | - | 0 | 1.98 | 1.66 | 0.84 | 10.9 | Example |
| 46 | 215 | 72 | 3.0 | 3.5 | 80 | - | 0 | 1.97 | 1.74 | 0.88 | 10.8 | Example |
| 47 | 228 | 95 | 2.4 | 3.2 | 60 | - | 0 | 1.99 | 1.73 | 0.87 | 11.2 | Example |
| 48 | 241 | 93 | 2.6 | 3.9 | 60 | - | 0 | 1.99 | 1.75 | 0.88 | 11.1 | Example |
| 49 | 221 | 82 | 2.7 | 3.6 | 60 | - | 0 | 1.98 | 1.74 | 0.88 | 11.1 | Example |
| 50 | 130 | 118 | 1.1 | 0.4 | 40 | yes | 5.6 | 1.96 | 1.64 | 0.84 | 10.3 | Comparative Example |
| 51 | 118 | 91 | 1.3 | 0.9 | 60 | - | 1.5 | 1.96 | 1.64 | 0.84 | 10.4 | Example |
| 52 | 103 | 69 | 1.5 | 0.9 | 40 | - | 0.8 | 1.96 | 1.66 | 0.85 | 10.3 | Example |
| 53 | 45 | 17 | 2.6 | 0.9 | 60 | - | 1.0 | 1.96 | 1.58 | 0.81 | 13.2 | Example |
| 54 | 79 | 33 | 2.4 | 0.8 | 40 | - | 0 | 1.96 | 1.60 | 0.82 | 11.4 | Example |
| 55 | 267 | 121 | 2.2 | 3.3 | 60 | - | 0.9 | 1.96 | 1.64 | 0.84 | 10.4 | Example |
| 56 | 332 | 198 | 1.7 | 3.2 | 60 | - | 1.5 | 1.96 | 1.64 | 0.84 | 10.4 | Example |
| 57 | 72 | 9 | 8.0 | 1.3 | 80 | - | 1.6 | 1.97 | 1.63 | 0.83 | 10.7 | Example |
| 58 | 119 | 21 | 5.7 | 2.3 | 80 | - | 0.4 | 1.97 | 1.67 | 0.85 | 10.3 | Example |
| 59 | 211 | 172 | 1.2 | 0.7 | 100 | - | 0.6 | 1.97 | 1.65 | 0.84 | 10.3 | Example |
| 60 | 292 | 213 | 1.4 | 1.9 | 80 | - | 1.6 | 1.97 | 1.67 | 0.85 | 10.2 | Example |
| 61 | 66 | 30 | 2.2 | 0.9 | 80 | - | 0 | 1.97 | 1.59 | 0.81 | 13.4 | Example |
| 62 | 85 | 35 | 2.4 | 1.5 | 100 | - | 0 | 1.97 | 1.63 | 0.83 | 10.9 | Example |
| 63 | 124 | 79 | 1.9 | 0.3 | 80 | - | 0.4 | 1.97 | 1.67 | 0.85 | 10.4 | Example |
| 64 | 134 | 72 | 1.7 | 0.1 | 80 | - | 1.6 | 1.96 | 1.64 | 0.84 | 10.3 | Example |
| 65 | 130 | 68 | 1.9 | 5.6 | 80 | - | 1.9 | 2.04 | 1.71 | 0.84 | 13.9 | Example |
| 66 | 128 | 67 | 1.9 | 4.7 | 80 | - | 0.4 | 2.04 | 1.71 | 0.84 | 14.0 | Example |
| 67 | 131 | 79 | 1.7 | 0.3 | 60 | - | 0.6 | 2.04 | 1.73 | 0.85 | 13.9 | Example |
| 68 | 131 | 73 | 1.8 | 0.1 | 80 | - | 1.4 | 2.04 | 1.73 | 0.85 | 14.0 | Example |
| 69 | 145 | 121 | 1.2 | 0.6 | 20 | - | 1.4 | 2.04 | 1.71 | 0.84 | 13.8 | Example |
| 70 | 135 | 96 | 1.4 | 0.9 | 20 | - | 0.4 | 2.04 | 1.71 | 0.84 | 14.0 | Example |
| 71 | 128 | 61 | 2.1 | 1.8 | 180 | - | 0.3 | 2.04 | 1.73 | 0.85 | 14.1 | Example |
| 72 | 129 | 59 | 2.2 | 1.9 | 220 | - | 1.3 | 2.04 | 1.73 | 0.85 | 13.8 | Example |

| | | | | | | | | | | | | |
|---|---|---|---|---|---|---|---|---|---|---|---|---|
| Note: Underlining indicates values outside scope of disclosure | | | | | | | | | | | | |

### [Table 6]

**Table 6**

| No. | Steel sheet microstructure | | | | | Cold rolling characteristics | | Magnetic properties of cold-rolled and annealed sheet | | | | Remarks |
|---|---|---|---|---|---|---|---|---|---|---|---|---|
| | Average grain size d_{C} at sheet width central portion [µm] | Average grain size d_{B} at position 10 mm from sheet width edge [µm] | d_{C}/d_{E} | Δdₘₐₓ [µm/mm] | X₂ [mm] | Cold-rolling fracture: yes or no | Number of edge cracks N [number] | Magnetic flux density Bs (T) | Magnetic flux density B₅₀ (T) | B₃₀/Bs | Iron loss W_{10/400} (W/kg) | |
| 73 | 149 | 71 | 2.1 | 1.9 | 80 | - | 0 | 2.04 | 1.73 | 0.85 | 13.8 | Example |
| 74 | 131 | 66 | 2.0 | 1.6 | 80 | - | 0 | 2.04 | 1.73 | 0.85 | 13.8 | Example |
| 75 | 133 | 67 | 2.0 | 1.5 | 60 | - | 0 | 2.04 | 1.71 | 0.84 | 13.8 | Example |
| 76 | 141 | 94 | 1.5 | 1.1 | 80 | - | 0 | 2.04 | 1.73 | 0.85 | 14.0 | Example |
| 77 | 131 | 69 | 1.9 | 1.6 | 60 | - | 0 | 2.04 | 1.71 | 0.84 | 13.8 | Example |
| 78 | 136 | 68 | 2.0 | 1.6 | 80 | - | 0 | 2.04 | 1.73 | 0.85 | 13.9 | Example |
| 79 | 129 | 92 | 1.4 | 0.7 | 80 | - | 0 | 2.04 | 1.73 | 0.85 | 13.9 | Example |
| 80 | 125 | 63 | 2.0 | 1.4 | 80 | - | 0 | 2.04 | 1.73 | 0.85 | 13.9 | Example |
| 81 | 127 | 79 | 1.6 | 1.2 | 60 | - | 0 | 2.04 | 1.73 | 0.85 | 13.8 | Example |
| 82 | 130 | 68 | 1.9 | 1.7 | 80 | - | 0 | 2.04 | 1.73 | 0.85 | 13.8 | Example |
| 83 | 141 | 83 | 1.7 | 1.5 | 80 | - | 0 | 2.04 | 1.77 | 0.87 | 13.9 | Example |
| 84 | 125 | 63 | 2.0 | 1.4 | 80 | - | 0 | 2.07 | 1.76 | 0.85 | 13.8 | Example |
| 85 | 145 | 91 | 1.6 | 1.3 | 80 | - | 0 | 2.04 | 1.77 | 0.87 | 14.1 | Example |
| 86 | 141 | 78 | 1.8 | 1.5 | 80 | - | 0 | 2.04 | 1.77 | 0.87 | 13.8 | Example |
| 87 | 133 | 60 | 2.2 | 1.7 | 40 | - | 0 | 1.88 | 1.58 | 0.84 | 8.1 | Example |
| 88 | 223 | 112 | 2.0 | 2.3 | 60 | - | 0.6 | 1.91 | 1.60 | 0.84 | 9.1 | Example |
| 89 | 215 | 126 | 1.7 | 2.3 | 60 | - | 0 | 1.91 | 1.61 | 0.84 | 9.4 | Example |
| 90 | 204 | 97 | 2.1 | 2.6 | 60 | - | 0 | 1.94 | 1.63 | 0.84 | 9.9 | Example |

| | | | | | | | | | | | | |
|---|---|---|---|---|---|---|---|---|---|---|---|---|
| Note: Underlining indicates values outside scope of disclosure | | | | | | | | | | | | |

From the results of Tables 5 and 6, it can be seen that all of the hot-rolled and annealed sheets according to the present disclosure have excellent cold rolling manufacturability, and furthermore, the cold-rolled and annealed sheets obtained by cold-rolling and annealing the hot-rolled and annealed sheets according to the present disclosure also have excellent magnetic properties.

### INDUSTRIAL APPLICABILITY

According to the present disclosure, a hot-rolled and annealed sheet for an electrical steel sheet, which has excellent cold rolling manufacturability (fracture resistance and edge crack resistance) in subsequent processes, is provided together with an advantageous method of producing the same. In the electrical steel sheet produced using the hot-rolled and annealed sheet of the present disclosure, deterioration in magnetic properties is sufficiently avoided. In particular, by using the hot-rolled and annealed sheet of the present disclosure in the production of a non-oriented electrical steel sheet, a non-oriented electrical steel sheet with high magnetic flux density and low iron loss at high frequencies can be provided, and by using this non-oriented electrical steel sheet, high efficiency in motors can be achieved. The present disclosure is thus highly useful from an industrial perspective.

## Claims

1. A hot-rolled and annealed sheet for an electrical steel sheet, comprising:
a chemical composition containing, in mass%,
C: 0.010 % or less,
Si: 1.0 % or more and 5.0 % or less,
Mn: 0.05 % or more and 5.0 % or less,
P: 0.1 % or less,
S: 0.01 % or less,
Al: 3.0 % or less, and
N: 0.0080 % or less,
with the balance being Fe and inevitable impurities, wherein
at least at one sheet width edge,
a ratio d_{C}/d_{E} of an average grain size dc at a sheet width central portion to an average grain size d_{E} at a position 10 mm from a sheet width edge is 1.2 or more.

2. The hot-rolled and annealed sheet for an electrical steel sheet according to claim 1, wherein
the chemical composition further contains, in mass%, one or more selected from the group consisting of
Zn: 0.0005 % or more and 0.020 % or less,
Mo: 0.002 % or more and 0.20 % or less,
Ni: 0.01 % or more and 1.0 % or less,
Cr: 0.01 % or more and 5.0 % or less,
Cu: 0.005 % or more and 1.0 % or less,
Ca: 0.0001 % or more and 0.10 % or less,
Mg: 0.0001 % or more and 0.10 % or less,
REM: 0.0001 % or more and 0.10 % or less,
Sn: 0.001 % or more and 0.20 % or less,
Sb: 0.001 % or more and 0.20 % or less,
B: 0.0020 % or less,
Ti: 0.010 % or less,
Nb: 0.0050 % or less,
V: 0.0050 % or less,
Pb: 0.0050 % or less,
Zr: 0.0050 % or less,
Ta: 0.0020 % or less,
W: 0.0050 % or less,
Se: 0.0050 % or less,
Bi: 0.0050 % or less,
As: 0.020 % or less,
Co: 0.10 % or less,
Ge: 0.030 %, and
Ga: 0.030 % or less.

3. The hot-rolled and annealed sheet for an electrical steel sheet according to claim 1 or 2, wherein the average grain size d_{C} at the sheet width central portion is 70 µm or more and 300 µm or less, and the average grain size d_{E} at a position 10 mm from the sheet width edge is 10 µm or more and 200 µm or less.

4. The hot-rolled and annealed sheet for an electrical steel sheet according to any one of claims 1 to 3, wherein a maximum value of an average grain size gradient in a sheet transverse direction is 0.2 µm/mm or more and 1.5 µm/mm or less.

5. The hot-rolled and annealed sheet for an electrical steel sheet according to any one of claims 1 to 4, wherein a position at which an average grain size gradient in a sheet transverse direction reaches a maximum is within 200 mm from the sheet width edge.

6. The hot-rolled and annealed sheet for an electrical steel sheet according to any one of claims 1 to 5, wherein at both sheet width edges, the ratio d_{C}/d_{E} of the average grain size dc at the sheet width central portion to the average grain size d_{E} at a position 10 mm from the sheet width edge is 1.2 or more.

7. A method of producing the hot-rolled and annealed sheet for an electrical steel sheet according to any one of claims 1 to 6, the method comprising a hot rolling process of hot-rolling a steel material having the chemical composition according to claim 1 or 2 to obtain a hot-rolled sheet, and a hot-rolled sheet annealing process of subjecting the hot-rolled sheet to hot-rolled sheet annealing, wherein in the hot-rolled sheet annealing process, when a sheet width central portion of the hot-rolled sheet is held at a holding temperature T₁, a maximum arrival temperature T₂ at a position 10 mm from a sheet width edge satisfies T₁ - T₂ ≥ 20 °C at least at one sheet width edge of the hot-rolled sheet.

8. The method of producing the hot-rolled and annealed sheet for an electrical steel sheet according to claim 7, wherein in the hot-rolled sheet annealing process, the holding temperature T₁ at the sheet width central portion of the hot-rolled sheet is 900 °C or higher and 1150 °C or lower, and a holding time t₁ at T₁ is 1 s or longer and 120 s or shorter.

9. The method of producing a hot-rolled and annealed sheet for an electrical steel sheet according to claim 7 or 8, wherein in the hot-rolled sheet annealing process, the maximum arrival temperature T₂ is 750 °C or higher and 1000 °C or lower.

10. The method of producing a hot-rolled and annealed sheet for an electrical steel sheet according to any one of claims 7 to 9, wherein in the hot-rolled sheet annealing process, a time t₂ during which a temperature at a position 10 mm from the sheet width edge of the hot-rolled sheet is equal to or higher than the maximum arrival temperature T₂ - 50 °C is 5 s or longer and 50 s or shorter.

11. The method of producing a hot-rolled and annealed sheet for an electrical steel sheet according to any one of claims 7 to 10, wherein in the hot-rolled sheet annealing process, a heating suppression region is between the sheet width edge and a position X₁ mm from the sheet width edge, and X₁ is 20 mm or more and 250 mm or less.

12. The method of producing a hot-rolled and annealed sheet for an electrical steel sheet according to any one of claims 7 to 11, wherein the maximum arrival temperature T₂ at a position 10 mm from the sheet width edge satisfies T₁ - T₂ ≥ 20 °C at both sheet width edges of the hot-rolled sheet.

13. A method of producing a non-oriented electrical steel sheet, the method comprising a cold rolling process of cold rolling the hot-rolled and annealed sheet for an electrical steel sheet according to any one of claims 1 to 6 to obtain a cold-rolled sheet, and an annealing process of annealing the cold-rolled sheet.
